Europäisches Patentamt

European Patent Office

Office européen des brevets

(19)

(11) Veröffentlichungsnummer : **0 263 231 B1**

# (12) EUROPÄISCHE PATENTSCHRIFT

(45) Veröffentlichungstag der Patentschrift :
26.04.89

(21) Anmeldenummer : 87101681.2

(22) Anmeldetag : 06.02.87

(51) Int. Cl.⁴ : **F 16 D 3/80, F 16 D 3/76**

(54) **Wellenkupplung.**

(30) Priorität : 07.10.86 DE 3634075

(43) Veröffentlichungstag der Anmeldung :
13.04.88 Patentblatt 88/15

(45) Bekanntmachung des Hinweises auf die Patenterteilung : 26.04.89 Patentblatt 89/17

(84) Benannte Vertragsstaaten :
DE FR GB IT SE

(56) Entgegenhaltungen :
EP--A-- 0 012 133
EP--A-- 0 117 267
DE--A-- 2 353 891
DE--A-- 3 023 300
FR--A-- 2 268 186
US--A-- 2 158 847

(73) Patentinhaber : **Firma Carl Freudenberg
Höhnerweg 4
D-6940 Weinheim/Bergstrasse (DE)**

(72) Erfinder : **Eckel, Hans-Gerd, Dr.
Im Hefen 1a
D-6945 Hirschberg 2 (DE)**
Erfinder : **Jörg, Benno Michael
Am Drachenstein 27
D-6940 Weinheim (DE)**

(74) Vertreter : **Weissenfeld-Richters, Helga, Dr.
Höhnerweg 2
D-6940 Weinheim/Bergstrasse (DE)**

**Beschreibung**

Die Erfindung betrifft eine nachgiebige Wellenkupplung, umfassend zwei an den Enden der zu verbindenden Wellen festgelegte, unnachgiebige und flüssigkeitsdichte Flansche, die relativ verdrehbar sind und gemeinsam einen die Rotationsachse koaxial umschließenden Ringraum begrenzen, wobei der Ringraum wenigstens teilweise mit Flüssigkeit gefüllt ist und im Bereich seines Innendurchmessers durch eine die Flansche gegeneinander abdichtende, der Drehbewegung der Flansche folgende Bewegungsdichtung verschlossen ist, wobei die Bewegungsdichtung mit einem in radialer Richtung wirksamen, elastischen Andrückmittel versehen und durch das Andrückmittel an die Gegenfläche anpreßbar ist.

Eine Wellenkupplung der vorgenannten Art wird beispielsweise in DE-C-35 27 990 beschrieben (entspricht EP-A-211 105, veröffentlicht am 25.2. 1987). Für die Übertragung der Drehbewegung ist dabei ein die Flansche verbindender Ringkörper aus gummielastischem Werkstoff vorgesehen, der durch eine Flüssigkeit abgestützt ist, um fliehkraftbedingte Deformierungen zu verhindern. Die Flüssigkeit ist in einem Ringraum enthalten, der innenseitig durch eine Bewegungsdichtung mit einer Dichtlippe aus polymerem Werkstoff verschlossen ist. Diese steht in permanentem Kontakt zur Gegenfläche und ist nur von geringer Lebensdauer.

Aus der US-PS 38 23 619 ist ein flüssigkeitsgefüllter Drehschwingungsdämpfer bekannt, bei dem der die Flüssigkeit enthaltende Ringraum im Bereich seines Innendurchmessers durch einen fest anvulkanisierten Gummikörper abgedichtet ist, um betriebsbedingte Verlagerungen der durch den Gummikörper verbundenen Teile in sich aufzunehmen. Eine andere drehelastische Wellenkupplung, die teilweise flüssigkeitsgefüllt ist und die eine Bewegungsdichtung aufweist, deren Dichtlippe bei Erreicher der Nenndrehzahl der Kupplung von der Gegenfläche abhebt, wird in DE-A-3023300 beschrieben.

Die Herstellung ist sehr aufwendig und wird zusätzlich dadurch belastet, daß große Relativverlagerungen der durch den Gummikörper verbundenen Teile eine große Dimensionierung desselben erfordern.

Der Erfindung liegt die Aufgabe zugrunde, eine nachgiebige, flüssigkeitgefüllte Wellenkupplung zur Übertragung von Drehbewegungen zu zeigen, die bei einfacher Herstellbarkeit und kleinen Dimensionen eine verbesserte Gebrauchsdauer aufweist als die bisher bekannten Ausführungen.

Diese Aufgabe wird erfindungsgemäß bei einer nachgiebigen Wellenkupplung der eingangs genannten Art dadurch gelöst, daß die Masse des Andrückmittels einschließlich der in radialer Richtung bewegbaren Teile der Bewegungsdichtung so bemessen ist, daß die Anpressung der Bewegungsdichtung an die Gegenfläche bei Erreichen der normalen Betriebsdrehzahl der Wellenkupplung zumindest aufgehoben ist. Eine völlige Aufhebung der Dichtfunktion und damit des Verschleißes ist bei sich drehender Wellenkupplung hiervon die Folge.

Die Ausbildung der erfindungsgemäß vorgeschlagenen Wellenkupplung geht aus von der Erkenntnis, daß das in der Wellenkupplung enthaltene Flüssigkeitsvolumen bei Erreichen der normalen Betriebsdrehzahl fliehkraftbedingt in die äußeren Bereiche des umschlossenen Ringraumes verlagert ist, was an sich bereits eine Abdichtung des Ringraumes im Bereich von dessen Innendurchmesser erübrigt. Darüberhinaus können die sich betriebsbedingt in der Flüssigkeit ergebenden Temperaturerhöhungen nicht mehr zum Aufbau eines Druckes in dem die Flüssigkeit enthaltenden Ringraum führen und nicht mehr zu einer sekundären Belastung der die Abdichtung bewirkenden Elemente. Die erfindungsgemäße Wellenkupplung zeichnet sich dadurch durch eine hervorragende Gebrauchsdauer aus.

Bei sinkender Drehzahl wird der vorstehend angesprochene Kompensationseffekt in bezug auf die Wirkung des Andrückmittels aufgehoben und die Bewegungsdichtung nimmt ihre ursprüngliche Funktion wieder an. Der die Flüssigkeit enthaltende Ringraum ist damit wiederum verschlossen. Auch bei Wellenstillstand kann keinerlei Anteil der Flüssigkeit entweichen.

Die Bewegungsdichtung kann durch einen an dem einen Flansch dichtend festgelegten Radialwellendichtring mit einer Dichtlippe gebildet sein, wobei die Dichtlippe bei nicht drehender Wellenkupplung an der zylindrisch ausgebildeten Gegenfläche des anderen Flansches relativ verschiebbar anliegt. Die Ausbildung des Radialwellendichtringes kann ähnlich wie bei der bekannten Ausführung erfolgen, was die Herstellung vereinfacht. Hinsichtlich der erfindungsgemäß angesprochenen Funktion sind jedoch in aller Regel Vorversuche erforderlich, um das Abheben der Dichtlippe von der Gegenfläche bei Erreichen der normalen Betriebsdrehzahl zu gewährleisten.

Die Bewegungsdichtung kann auch aus einem Ringkörper aus nachgiebigem Werkstoff bestehen, wobei der Ringkörper einen radialen Ringspalt zwischen den beiden Flanschen außenseitig überdeckt und mit einer elastischen Vorspannung in Umfangsrichtung verschiebbar an den so gebildeten Außenflächen anliegt. Zweckmäßig werden die Außenflächen bei einer solchen Ausführung durch gegensinnig geneigte Kegelflächen gebildet, die einen sich in Richtung des Spaltes vermindernden Durchmesser haben. Der Ringkörper kehrt bei einer solchen Ausbildung selbst nach längerer Unterbrechung seiner Dichtfunktion selbsttätig in den Bereich radial außerhalb des Spaltes zurück, was für die Erzielung einer guten statischen Abdichtwirkung bei Wellenstillstand von Vorteil ist. Eine entsprechende Selbstjustierung wird besonders dann mit großer Zuverlässigkeit gewährleistet, wenn der Ringkörper ein kreisförmig begrenztes Profil aufweist.

Für die grundsätzliche Funktion der erfindungsgemäßen Wellenkupplung ist es an sich ausreichend, wenn die Anpressung der Bewegungsdichtung an die Gegenfläche bei Erreichen der normalen Betriebsdrehzahl der Wellenkupplung aufgehoben ist. Auch eine Spaltbildung ist jedoch ohne weiteres möglich und erleichtert den Druckausgleich zwischen dem die Flüssigkeit enthaltenden Ringraum und der Umgebung.

Die Bewegungsdichtung kann dem einen der beiden Flansche unverdrehbar zugeordnet sein, wobei dieser Flansch einen Anschlag zur Begrenzung der fliehkraftbedingten Ausweichbewegung des Andrückmittels aufweist. Eine entsprechende Ausführung ist insbesondere dann von Vorteil, wenn die Betriebsdrehzahlen nicht auf einen festen Wert fixiert ist, sondern oberhalb eines bestimmten Mindestwertes sehr große Steigerungen erfahren kann. Ein entsprechender Anwendungsfall ist beispielsweise bei motorischen Antriebsmitteln von Kraftfahrzeugen häufig gegeben.

Der Gegenstand der vorliegenden Erfindung wird nachfolgend anhand der als Anlage beigefügten Zeichnung weiter erläutert. Es zeigen :

Figuren 1 und 2 zwei Wellenkupplungen, bei denen der die Flüssigkeit enthaltende Ringraum 2 im Bereich seines Innenumfanges durch voneinander abweichend ausgebildete Bewegungsdichtungen verschlossen ist.

Figur 3 eine Ausführung einer Wellenkupplung, bei der zwei im Bereich ihres Außenumfanges verbundene Ringräume 2 vorgesehen sind, in welchen die Flüssigkeit enthalten ist. Die Ringräume sind beide im Bereich ihres Innenumfanges durch Bewegungsdichtungen bei Wellensstillstand verschlossen.

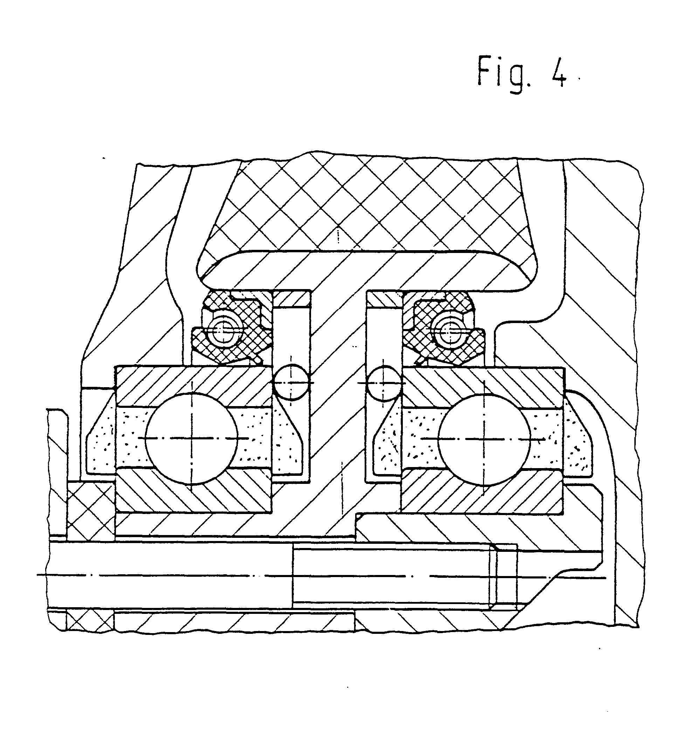

Figur 4 einen vergrößert wiedergegebenen Abschnitt der Ausführung gemäß Figur 3.

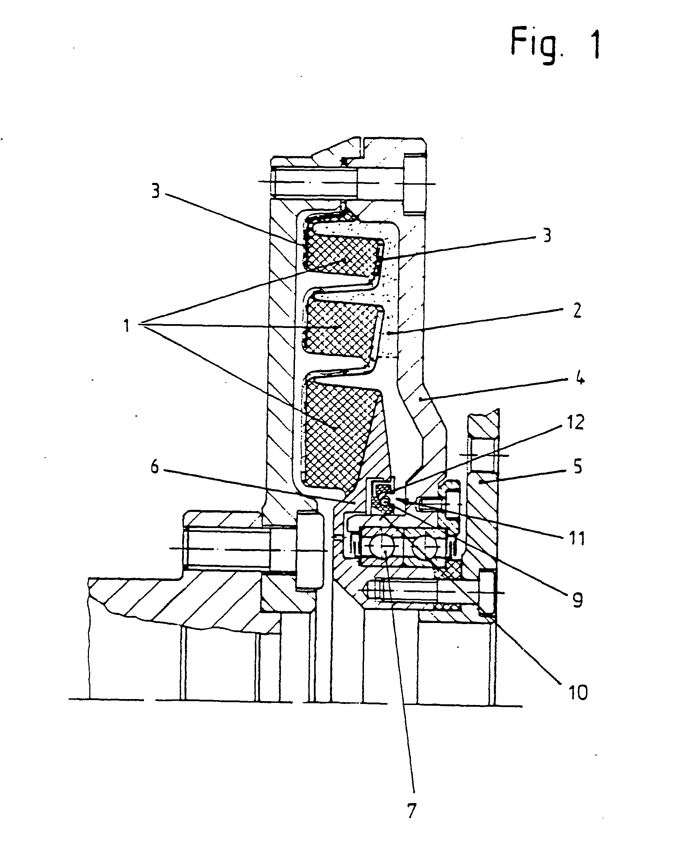

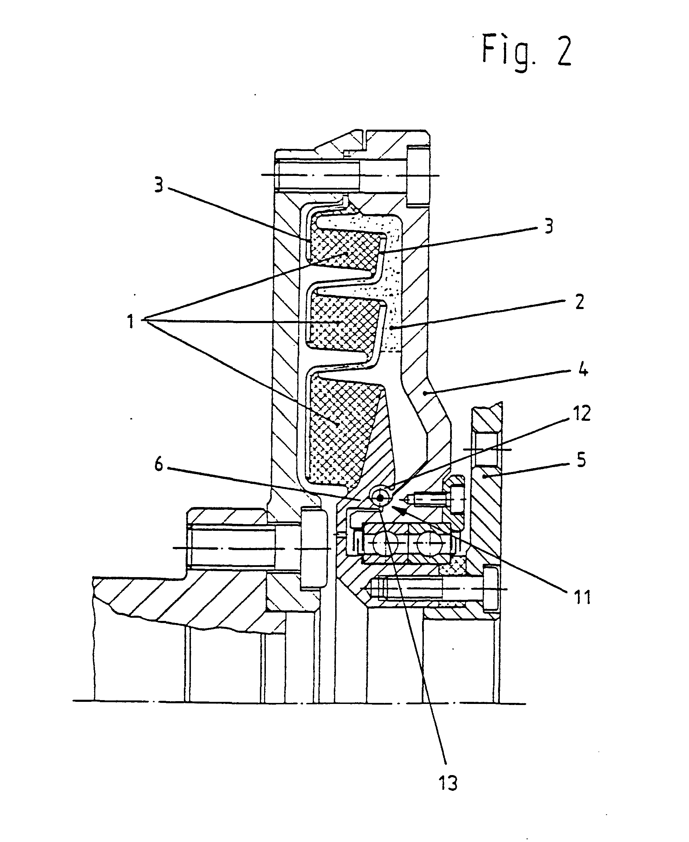

Die in den Figuren 1 und 2 gezeigte Wellenkupplung umfaßt die beiden Flansche 4, 6, die jeweils an einem der einander gegenüberliegenden und zu verbindenden Wellenenden festgelegt sind. Die beiden Flansche sind durch eine Kugellagerung 7 relativ zueinander verdrehbar aufeinander abgestützt und umschließen gemeinsam einen die Rotationsachse kreisringförmig umgebenden Hohlraum 2.

Beide Flansche 4, 6 sind mit in den Hohlraum radial eingreifenden Hilfsflanschen versehen, die einen axialen Abstand haben und der Festlegung des Federkörpers 1 dienen. Dieser besteht aus Gummi und umfaßt drei einander koaxial umschließende, einzelne Federkörper. Sie wirken in einer Reihenschaltung zusammen und sind hinsichtlich ihres Querschnittes und ihrer Härte so aufeinander abgestimmt, daß sich in bezug auf das Spektrum eingeleiteter Schwingung eine optimale Isolierung ergibt.

Der von dem Federkörper 1 und dem Flansch 4 umschlossene Ringraum ist teilweise mit einem Gemisch aus Glykol und Wasser gefüllt. Die Menge des Gemisches ist so bemessen, daß der äußere Teil des angesprochenen Ringraumes bei Erreichen der Betriebsdrehzahl der Welle bis zur radial innen liegenden Begrenzungskante des mittleren Federelementes aufgefüllt ist. Bei einem Außendurchmesser der Wellenkupplung von 350 mm ergibt sich hierdurch ein gutes Betriebsverhalten bis zu einer Wellendrehzahl von 8.000/min. Bis zum Erreichen der genannten Drehzahl werden störende Deformierungen der äußeren Federkörper vermieden, was auf deren Abstützung durch die Flüssigkeit beruht.

Der innere Federkörper ist durch Fliehkräfte vergleichsweise geringer belastet und kompakter ausgeführt. Er bedarf daher nicht der zusätzlichen Abstützung.

Im Bereich des Innenumfanges des Ringraumes 2 ist eine Bewegungsdichtung 11 vorgesehen. Diese ist hinsichtlich ihrer Gestaltung den bekannten Radialwellendichtringen nachempfunden und enthält ebenso wie diese einen im Bereich ihres Außenumfanges einvulkanisierten Verstärkungsring aus Metall, der ein winkliges Profil aufweist. Durch den Verstärkungsring ist eine relativ unverdrehbare Festlegung in der Zylinderbohrung des Flansches 6 gewährleistet.

Die Bewegungsdichtung weist im Bereich ihres Innenumfanges eine axial in Richtung des Ringraumes 2 vorspringende Dichtlippe auf, die an der Gegenfläche 10 mit einer Dichtkante anliegt. Die Dichtkante ist beiderseits durch Kegelflächen begrenzt.

Die Dichtlippe weist radial außerhalb der Dichtkante eine umlaufende Ringnut auf, in welcher eine ringförmig in sich geschlossene Wendelfeder eingebettet ist. Die Wendelfeder bewirkt die Anpressung der Dichtkante an die Gegenfläche 10. Sie bildet das Andrückmittel für die Dichtlippe.

Zur Funktion ist folgendes auszuführen :

Bei nichtdrehender Wellenkupplung befindet sich das in dem Ringraum 2 enthaltene Flüssigkeitsvolumen an der tiefsten Stelle des Ringraumes und kann die Bewegungsdichtung 11 zumindest teilweise überfluten. Ein Austreten aus dem Ringraum 2 ist dennoch ausgeschlossen, weil die Dichtkante derBewegungsdichtung 11 in der gegebenen Betriebssituation durch das Andrückmittel 9 dichtend an die Gegenfläche 10 angepreßt ist.

Bei einsetzender Drehbewegung der Wellenkupplung verteilt sich das in dem Ringraum 2 enthaltene Flüssigkeitsvolumen zunehmend in den äußeren Bereich des Ringraumes 2 und es ergibt sich zugleich eine Verminderung der Anpressung der Dichtlippe der Bewegungsdichtung 11 an die Gegenfläche 10. Der diesbezügliche Wert erreicht bei der normalen Betriebsdrehzahl der Wellenkupplung sein Minimum, wodurch sich bei einer noch höheren Drehzahl der Wellenkupplung ein Abheben der Dichtlippe von der Gegenfläche 10 ergibt. Die Dichtlippe ist dadurch unter normalen Betriebsbedingungen weder einem reibenden Verschleiß ausgesetzt noch der statischen Druckbelastung durch das sich erwärmungsbedingt ausdehnende Flüssigkeitsvolumen in dem Ringraum 2. Sie kehrt dennoch bei sich vermindernder Drehzahl unter erneuter Herstellung der Dichtfunktion immer wieder in die zeichnerisch dargestellte, ursprüngliche Lage zurück. Die Beweglichkeit der Dichtlippe nach außen ist durch den Anschlag 12 begrenzt.

Die in Figur 2 gezeigte Wellenkupplung ist hinsichtlich ihres Aufbaues und hinsichtlich ihrer Funktion der vorstehend beschriebenen ähnlich. Die Bewegungsdichtung besteht in diesem Falle indessen aus einem Ringkörper aus nachgiebigem Werkstoff, der einen in radialer Richtung verlaufenden Ringspalt 13 außenseitig überdeckt und unter einer nach innen gerichteten, elastischen Vorspannung an den so gebildeten Außenflächen anliegt. Die Außenflächen der beiden Flansche 4, 6 sind in entgegengesetzter Richtung kegelig geneigt und haben im Bereich des Spaltes ihren kleinsten Durchmesser. Der Ringkörper der Bewegungsdichtung wird hierdurch sowie durch die kreisförmige Gestalt seines Profils stets in Richtung auf den Spalt gelenkt. Seine Beweglichkeit in radialer Richtung nach außen ist durch den Anschlag 12 begrenzt.

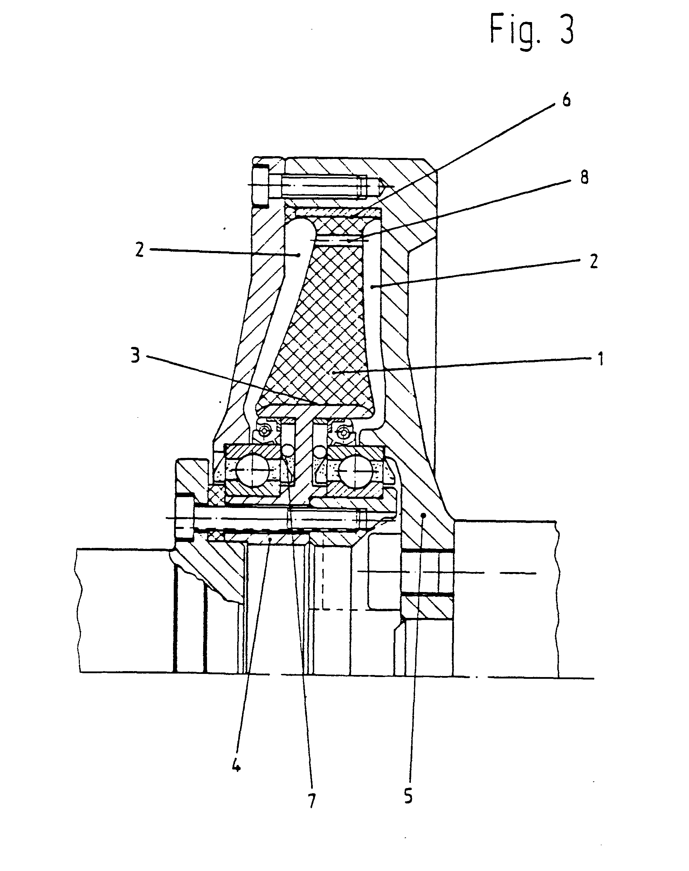

Bei der Ausführung nach Figur 3 gelangt ebenso wie bei dem vorstehend beschriebenen Beispiel ein die Rotationsachse koaxial umgebender, kreisringförmig in sich geschlossener Federkörper zur Anwendung. Dieser verbindet im Gegensatz zum vorstehend beschriebenen Ausführungsbeispiel jedoch nicht axial einander gegenüberliegende Halteflächen der beiden Flansche, sondern einander radial umschließende Halteflächen.

Die beiden Flansche sind ebenso wie diejenigen nach den Figuren 1 und 2 an den beiden verbindenden Wellenenden festgelegt und durch eine Kugellagerung verdrehbar aufeinander abgestützt. Sie umschließen gemeinsam die durch die Bewegungsdichtungen 7 nach außen abgeschlossenen Ringräume. Diese sind im axialen mittleren Bereich durch den aus gummielastischem Werkstoff bestehenden Federkörper 1 voneinander getrennt, und teilweise mit einem Gemisch aus Glykol und Wasser gefüllt. Sie stehen durch den im Bereich des Außenumfanges des Federkörpers 1 angeordneten Kanal 8 in einer hydraulischen Verbindung. Die Druckverteilung in den beiden Ringräumen 2 ist daher unabhängig von der Drehzahl absolut identisch.

Als Bewegungsdichtung gelangt auch in diesem Falle die den üblichen Radialwellendichtringen nachempfundene Ausführung zur Anwendung. Sie enthält eine in axialer Richtung vorspringende Dichtlippe, die durch eine Ringwendelfeder bei nichtdrehender Kupplung an eine sich in axialer Richtung erstreckende Gegenfläche angepreßt ist. Bei Erreichen der normalen Betriebsdrehzahl ergibt sich auch in diesem Falle ein Abheben der Dichtlippe von der Gegenfläche. Flüssigkeit vermag durch den so gebildeten Spalt dennoch nicht auszutreten. Sie ist in der angesprochenen Betriebssituation vielmehr ringförmig in den äußeren Bereichen der Ringräume 2 verteilt.

**Patentansprüche**

1. Nachgiebige Wellenkupplung, umfassend zwei an den Enden der zu verbindenden Wellen festgelegte, unnachgiebige und flüssigkeitsdichte Flansche (4, 6), die relativ verdrehbar sind und gemeinsam einen die Rotationsachse koaxial umschließenden Ringraum (2) begrenzen, wobei der Ringraum (2) wenigstens teilweise mit Flüssigkeit gefüllt ist und im Bereich seines Innendurchmessers durch eine die Flansche gegeneinander abdichtende, der Drehbewegung der Flansche folgende Bewegungsdichtung verschlossen ist, wobei die Bewegungsdichtung (11) mit einem in radialer Richtung wirksamen, elastischen Andrückmittel (9) versehen und durch das Andrückmittel an die Gegenfläche (10) anpreßbar ist, wobei das Andrückmittel (9) einschließlich der in radialer Richtung bewegbaren Teile der Bewegungsdichtung (11) eine Masse aufweist, die so bemessen ist, daß die Anpressung der Bewegungsdichtung (11) an die Gegenfläche (10) bei Erreichen der normalen Betriebsdrehzahl der Wellenkupplung zumindest aufgehoben ist.

2. Wellenkupplung nach Anspruch 1, dadurch gekennzeichnet, daß die Bewegungsdichtung durch einen an dem einen Flansch (6) dichtend festgelegten Radialwellendichtring mit einer Dichtlippe gebildet ist und daß die Dichtlippe bei nichtdrehender Wellenkupplung an der zylindrisch ausgebildeten Gegenfläche (9) des anderen Flansches (4) anliegt.

3. Wellenkupplung nach Anspruch 1, dadurch gekennzeichnet, daß die Bewegungsdichtung (11) aus einem Ringkörper aus nachgiebigem Werkstoff besteht und daß der Ringkörper einen radialen Ringspalt (13) zwischen den beiden Flanschen außenseitig überdeckt und relativ verschiebbar an den so gebildeten Außenflächen anliegt.

4. Wellenkupplung nach Anspruch 3, dadurch gekennzeichnet, daß die Außenflächen durch gegensinnig geneigte Kegelflächen gebildet sind, die einen sich in Richtung des Spaltes vermindernden Durchmesser haben.

5. Wellenkupplung nach Anspruch 3 bis 4, dadurch gekennzeichnet, daß der Ringkörper ein kreisförmig begrenztes Profil aufweist.

6. Wellenkupplung nach Anspruch 1 bis 5, dadurch gekennzeichnet, daß die Bewegungsdichtung einem der Flansche (4, 6) unverdrehbar zugeordnet ist und daß dieser Flansch einen Anschlag (12) zur Begrenzung der radialen Beweglichkeit des Andrückmittels (9) aufweist.

**Claims**

1. A flexible shaft coupling comprising two inflexible and fluid-tight flanges (4, 6) which are fixed to the ends of the shafts to be connected and which are relatively rotatable and jointly delimit an annular space (2) coaxially surrounding the axis of rotation, the annular space (2) being filled at least partially with fluid and being closed in the region of its inner diameter by means of a movement seal which seals off the flanges relative to one another and which follows the rotary movement of the flanges, the movement seal (11) being equipped with a radially active elastic pressing means (9) and being pressable against the opposite surface (10) by the pressing means, the pressing means (9), including the parts of the movement seal (11) moveable in the radial direction, having a mass which is so calculated that the pressing of the movement seal (11) against the opposite surface (10) is at least cancelled when the normal operating speed of the shaft coupling is reached.

2. A shaft coupling according to claim 1, characterized in that the movement seal is formed by a radial shaft sealing ring fixed to one of the flanges (6) in a sealing manner and having a sealing lip, and in that the sealing lip is in contact with the cylindrically constructed opposite surface (10) of the other flange (4) when the shaft coupling is not rotating.

3. A shaft coupling according to claim 1, characterized in that the movement seal (11) is composed of an annular body of flexible material and that the annular body covers on the outside a radial annular gap (3) between the two flanges and is in contact with the outer surfaces thus formed so as to be relatively displaceable.

4. A shaft coupling according to claim 3, characterized in that the outer surfaces are formed by conical surfaces of opposite inclination and of diameter decreasing in the direction of the gap.

5. A shaft coupling according to claim 3 or 4, characterized in that the annular body has a profile with circular boundary.

6. A shaft coupling according to any of claims 1 to 5, characterized in that the movement seal is associated with one of the flanges (4, 6) in a nonrotating manner and that said flange has a stop (12) to limit the radial mobility of the pressing means (9).


**Revendications**

1. Accouplement d'arbres élastique comprenant deux brides (4, 6) étanches aux liquides, rigides et fixées aux extrémités des arbres à accoupler, qui peuvent tourner relativement l'une par rapport à l'autre et qui limitent ensemble un espace annulaire (2) entourant coaxialement l'axe de rotation, tandis que l'espace annulaire (2) est rempli, au moins partiellement, d'un liquide et est fermé dans la zone de son diamètre intérieur par un joint mobile suivant le mouvement de rotation des brides et assurant l'étanchéité entre celles-ci, tandis que le joint mobile (11) est pourvu d'un moyen de pression élastique (9) agissant en direction radiale et peut être pressé par ce moyen de pression sur la surface opposée (10), dans lequel le moyen de pression (9), y compris les pièces mobiles en direction radiale du joint mobile (11), présentent une masse choisie de façon à ce que la pression du joint mobile (11) sur la surface opposée (10) soit supprimée au moins lorsque l'accouplement d'arbres atteint sa vitesse normale de fonctionnement.

2. Accouplement d'arbres selon la revendication 1, caractérisé en ce que le joint mobile est constitué par une bague d'étanchéité radiale pour arbre fixée de manière étanche à l'une des deux brides (6) et pourvue d'une lèvre d'étanchéité et que la lèvre d'étanchéité appuie sur la surface opposée (9) de l'autre bride (4) et de forme cylindrique lorsque l'accouplement d'arbres n'est pas en rotation.

3. Accouplement d'arbres selon la revendication 1, caractérisé en ce que le joint mobile (11) est constitué d'un corps annulaire en matériau élastique et que le corps annulaire recouvre extérieurement un jeu annulaire radial (13) entre les deux brides et appuie sur les surfaces extérieures ainsi formées, avec possibilité de déplacement relatif.

4. Accouplement d'arbres selon la revendication 3, caractérisé en ce que les surfaces extérieures sont constituées par des surfaces coniques présentant des inclinaisons opposées qui ont un diamètre diminuant en direction du jeu.

5. Accouplement d'arbres selon les revendications 3 et 4, caractérisé en ce que le corps annulaire a un profil circulaire.

6. Accouplement d'arbres selon les revendications 1 à 5, caractérisé en ce que le joint mobile est monté sur l'une des brides (4, 6) sans possibilité de rotation et que cette bride présente une butée 12 pour limiter la mobilité radiale du moyen de pression (9).

Fig. 1

Fig. 2

Fig. 3

Fig. 4

4